# EUROPEAN PATENT APPLICATION

(11) **EP 3 291 552 A1**
(43) Date of publication of application: **07.03.2018**
(21) Application number: 16186506.8
(22) Date of filing: 31.08.2016
(51) Int. Cl.: H04N 17/00, G01M 11/02

(54) **STRAY LIGHT EFFECT TESTING OF A CAMERA**

(71) Applicant: Autoliv Development AB, 447 83 Vårgårda (SE)
(72) Inventor: EIDET, Per-Anders, 582 75 Linköping (SE); LUNDMARK, Astrid, 587 50 Linköping (SE)
(74) Representative: Kransell & Wennborg KB

(57) **Abstract**

There is provided mechanisms for testing a camera for stray light effects. A method is performed by an image analysis device. The method comprises obtaining an image comprising a light source, the image having been captured by the camera. The method comprises determining whether the camera is free from stray light effects or not by comparing light intensity in the image outside a contour of the light source to a stray light indicator parameter.

## Description

### TECHNICAL FIELD

Embodiments presented herein relate to a method, an image analysis device, a computer program, and a computer program product for testing a camera for stray light effects.

### BACKGROUND

In cameras, there could be a challenge to obtain good optical performance capacity for a given set of camera lenses used by the camera and/or the mechanical construction of the camera itself (not considering the camera lens).

For example, one parameter related to optical performance is lens flare. In general terms, lens flare could be defined by the light scattered in lens systems, or other mechanical parts of the camera, through generally unwanted image formation mechanisms, such as internal reflection and scattering from the lens and/or mechanics or from contamination or scratches on the lens surface. Lens flare mechanisms differ from the intended image formation mechanism that depends on refraction of the image rays. Lens flare thus gives rise to stray light effects. In general terms, stray light effects appear in two ways: as visible artifacts, and as a haze across the image. The haze makes the image look "washed out" by reducing contrast and colour saturation (adding light to dark image regions, and adding white to saturated regions, thereby reducing their saturation, and which can cause objects in the image to be hidden). Visible artifacts, usually in the shape of the lens iris, are formed when light follows a pathway through the lens that contains one or more reflections from the lens surfaces. Hence, lens flare negatively impacts the optical performance of the camera by giving rise to stray light effects.

Document US 7 69 124 B2 is concerned with stray light in camera applications. Document US 7 697 124 B2 discloses an object distance adjusting unit that can vary the (apparent) distance between the light source and the camera. How the actual stray light measurement is performed at different (apparent) distances is not addressed.

Hence, there is still a need for improved mechanisms for testing a camera for stray light effects.

### SUMMARY

An object of embodiments herein is to provide efficient mechanisms for testing a camera for stray light effects.

According to a first aspect there is presented a method for testing a camera for stray light effects. The method is performed by an image analysis device. The method comprises obtaining an image comprising a light source, the image having been captured by the camera. The method comprises determining whether the camera is free from stray light effects or not by comparing light intensity in the image outside a contour of the light source to a stray light indicator parameter.

Advantageously this provides an efficient way for testing a camera for stray light effects.

According to a second aspect there is presented an image analysis device for testing a camera for stray light effects. The image analysis device comprises processing circuitry. The processing circuitry is configured to cause the image analysis device to obtain an image comprising a light source, the image having been captured by the camera. The processing circuitry is configured to cause the image analysis device to determine whether the camera is free from stray light effects or not by comparing light intensity in the image outside a contour of the light source to a stray light indicator parameter.

According to a third aspect there is presented an image analysis device for testing a camera for stray light effects. The image analysis device comprises processing circuitry and a computer program product. The computer program product stores instructions that, when executed by the processing circuitry, causes the image analysis device to perform operations, or steps.

The operations, or steps, cause the image analysis device to obtain an image comprising a light source, the image having been captured by the camera. The operations, or steps, cause the image analysis device to determine whether the camera is free from stray light effects or not by comparing light intensity in the image outside a contour of the light source to a stray light indicator parameter.

According to a fourth aspect there is presented an image analysis device for testing a camera for stray light effects. The image analysis device comprises an obtain module configured to obtain an image comprising a light source, the image having been captured by the camera. The image analysis device comprises a determine module configured to determine whether the camera is free from stray light effects or not by comparing light intensity in the image outside a contour of the light source to a stray light indicator parameter.

According to a fifth aspect there is presented a computer program for testing a camera lens for stray light effects, the computer program comprising computer program code which, when run on an image analysis device, causes the image analysis device to perform a method according to the first aspect.

According to a sixth aspect there is presented a computer program product comprising a computer program according to the fifth aspect and a computer readable storage medium on which the computer program is stored. The computer readable storage medium could be a non-transitory computer readable storage medium.

It is to be noted that any feature of the first, second, third, fourth, fifth and sixth aspects may be applied to any other aspect, wherever appropriate. Likewise, any advantage of the first aspect may equally apply to the second, third, fourth, fifth and/or sixth aspect, respectively, and vice versa. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig. 1 is a schematic diagram illustrating a system according to embodiments;
Figs. 2, 3, 4, 5, 7, and 8 are schematic illustrations of images captured by a camera of the system in Fig. 1;
Fig. 6 schematically illustrates light intensity as a function of radius according to an embodiment;
Figs. 9 is a flowchart of methods according to embodiments;
Fig. 10 is a schematic diagram showing functional units of an image analysis device according to an embodiment;
Fig. 11 is a schematic diagram showing functional modules of an image analysis device according to an embodiment; and
Fig. 12 shows one example of a computer program product comprising computer readable storage medium according to an embodiment.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

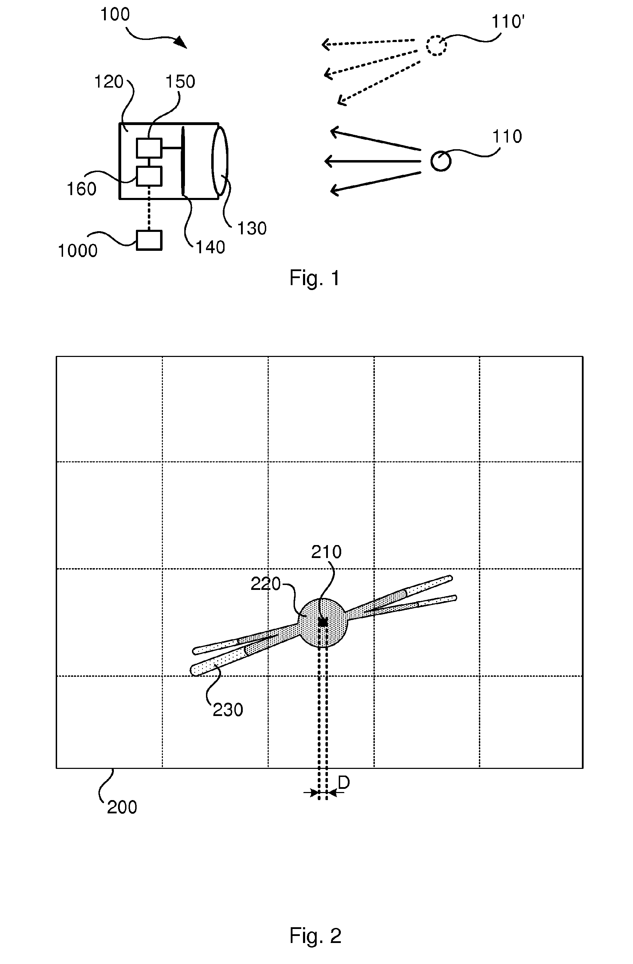

Fig. 1 is a schematic diagram illustrating a system 100 where embodiments presented herein can be applied. The system 100 comprises light sources 110, 110', a camera 120 (defining a unit under test, UUT), and an image analysis device 1000. The camera 120 is configured to capture images. In order to do so, the cameras 120 comprises at least one camera lens 130, an image sensor 140, processing circuitry 150 (e.g., comprising an analog to digital converter and implementing image processing functions), and an image storage 160 (for storing captured images). As will be further disclosed below, the image analysis device 100 is configured to test the camera 120 for stray light effects. The image analysis device 1000 could be part of, or operatively connectable to, the camera 120 such that the image analysis device 1000 is enabled to read and analyze images stored in the image storage 160 in order to test the camera 120 for stray light effects.

For non-limiting and illustrative purposes only, it will hereinafter be assumed that the camera 120 is configured to capture an image at least of the light source 110.

Fig. 2 is a schematic diagram illustrating an image 200 as captured by the camera 120. For illustrative purposes the image 200 has been negated such that dark areas in the image 200 represent areas of high light intensity in the scene (comprising the light source 110) captured by the camera 120. The light source 210 in the image 200 thus corresponds to the light source 110 in Fig. 1. The image 200 suffers from stray light effects. In Fig. 2 the measurement D represents the true diameter of the light source 210 in the image (without stray light effects). The stray light can be seen as both a blurred light source 220 which may hide any objects behind this (extended) image of the light source, and appearing as swords 230 originating from the light source 210.

In general terms, small straight lines on the surface of the camera lens 130, e.g. scratches, may give rise to swords 230 whereas blurred light sources 220 and ghost images are likely to originate from multiple reflections inside the camera lens 130 and/or from the internal mechanics of the camera 120. As the skilled person understands these are just examples of stray light effects and there are many variations of how the stray light effects could appear and depend on the light source (intensity, angle of incidence, etc.).

The swords 230 can be misinterpreted as objects in the scene and, when the camera 120 is part of a vehicle navigation system, might cause the vehicle to brake and/or to be steered in order to avoid a potential collision with the thus suddenly appearing object (i.e. stray light sword) in front of the vehicle. Stray light therefore could cause both false positives and false negatives outcomes during object detection as performed by the vehicle navigation system.

According to state of the art, in order to analyze the camera 120 for stray light effects, the image 200 is viewed by a human operator. The operator has a library of images from corner samples (as defined by images of samples of cameras that are on the borderline between being accepted or rejected due to stray light effects) to help deciding if the camera 120 under test is acceptable or faulty. This test can be cumbersome to perform and it could be difficult for the operator to make a correct decision whether the camera 120 under test provide results that are better or worse than some reference images. Further, the operator does not record any indications of amount of stray light effect of the camera 120 under test; the camera 120 under test is in the end just marked as a "pass" or "fail" in terms of stray light effects, i.e. a binary decision ("pass" or "fail"), without any indication of how close to requirement the stray light actually is.

According to embodiments disclosed herein there is presented methods for testing a camera 120 for stray light effects and an image analysis device 1000 configured to perform such testing. The herein disclosed embodiments are based on quantifying the level of stray light in order to determine whether the camera 120 under test is within a given specification or not.

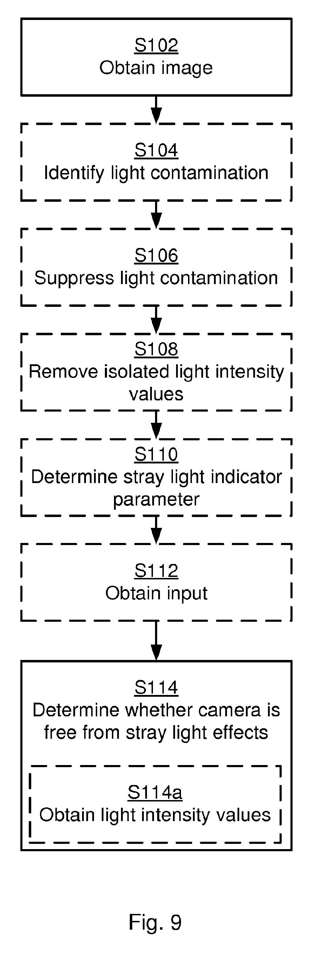

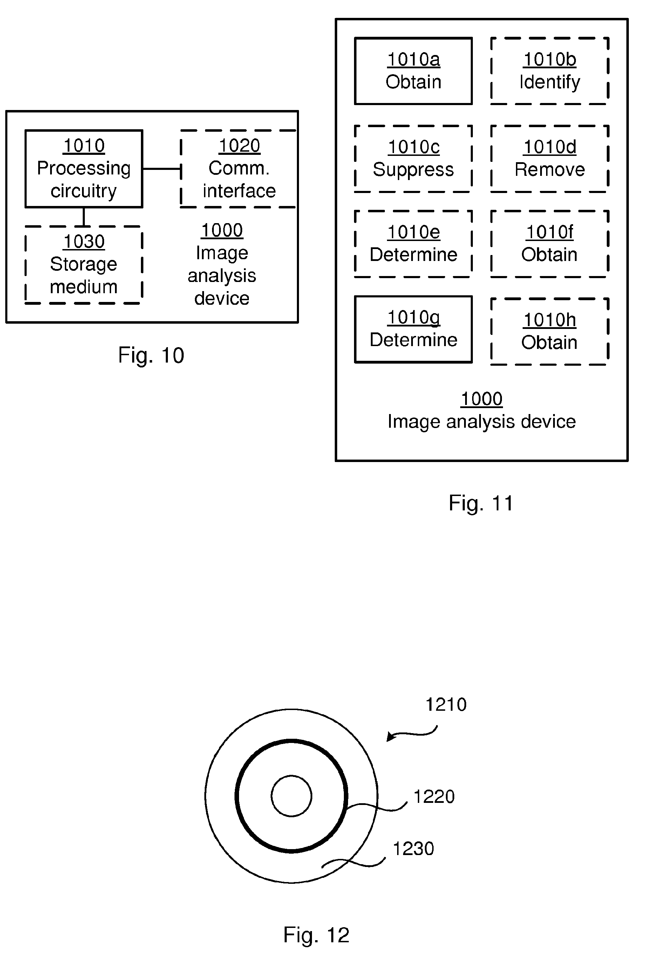

Fig. 9 is a flow chart illustrating embodiments of methods for testing a camera 120 for stray light effects. The methods are performed by the image analysis device 1000. The methods are advantageously provided as computer programs 1220, see Fig. 12.

Reference is now made to Fig. 9 illustrating a method for testing a camera 120 for stray light effects as performed by the image analysis device 1000 according to an embodiment. Continued references are made to Figs. 1 and 2.

S102: The image analysis device 1000 obtains an image 200 comprising a light source 210. The image 200 has been captured by the camera 120 (optionally using the camera lens 130).

S114: The image analysis device 1000 determines whether the camera lens 130 is free from stray light effects or not by comparing light intensity in the image 200 outside a contour of the light source 210 to a stray light indicator parameter.

The contour of the light source 210 in the image 200 corresponds to a circumference having a diameter D (as introduced above with reference to Fig. 2) and hence corresponds to the diameter of the light source 210 in the image 200 not considering any stray light effects. In order to define the contour the image 200 could be captured at a specific distances from the light source 110.

Embodiments relating to further details of testing a camera 120 for stray light effects as performed by the image analysis device 1000 will now be disclosed.

There may be different ways to define the stray light indicator parameter. Different embodiments relating thereto will now be described in turn.

According to some aspects the stray light indicator parameter is defined such that the stray light intensity at an outside defined radius should be below corresponding intensity thresholds in order for the camera 120 to be free from stray light effects. In more details, according to an embodiment the stray light indicator parameter is defined by the number of pixels in the image 200 having a light intensity value above an intensity threshold value and being located outside a circle having a parameter based radius. This circle could be concentric with the contour of the light source 210. The camera 120 is then considered free from stray light effects when this number of pixels is smaller than a pixel number threshold value. In this respect there could be at least two parameter based radii, each defining a respective intensity threshold value, where the intensity threshold value decreases with increasing parameter based radii.

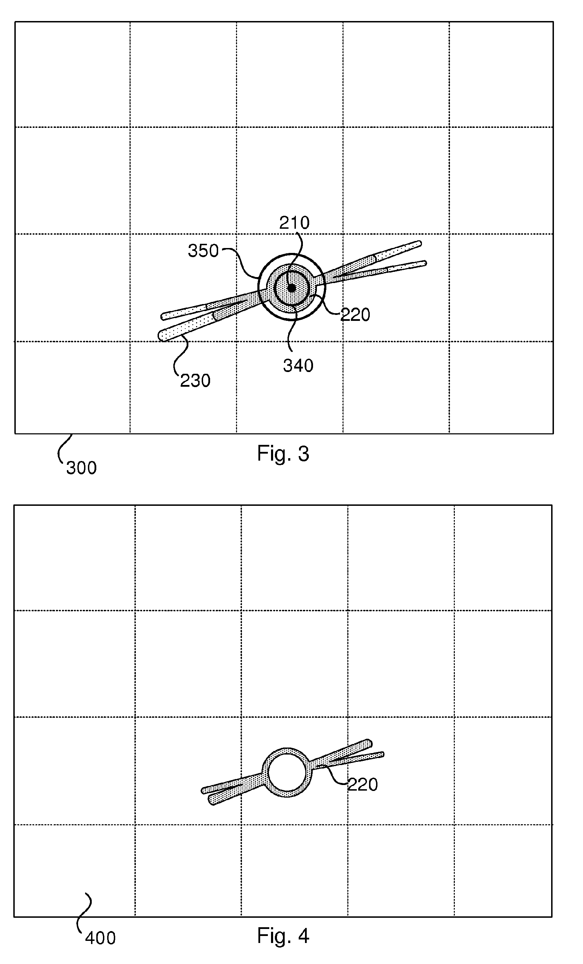

As an example, consider the illustrative example of Fig. 3. Fig. 3 is a schematic diagram illustrating an image 300 as captured by the camera 120. The image 300 corresponds to the image 200 but in addition thereto circles 340, 350 have been added to the image 300. A first (inner) circle 340 and a second (outer) circle 350 are placed concentric with the contour of the light source 210. With the radius R1 of the first (inner) circle 340 is associated a light intensity I1. For all distances from the light source 310 greater than radius R1 (i.e. outside the circle 340) the stray light intensity is not allowed to exceed light intensity I1 in order for the camera 120 to be considered free from stray light effects.

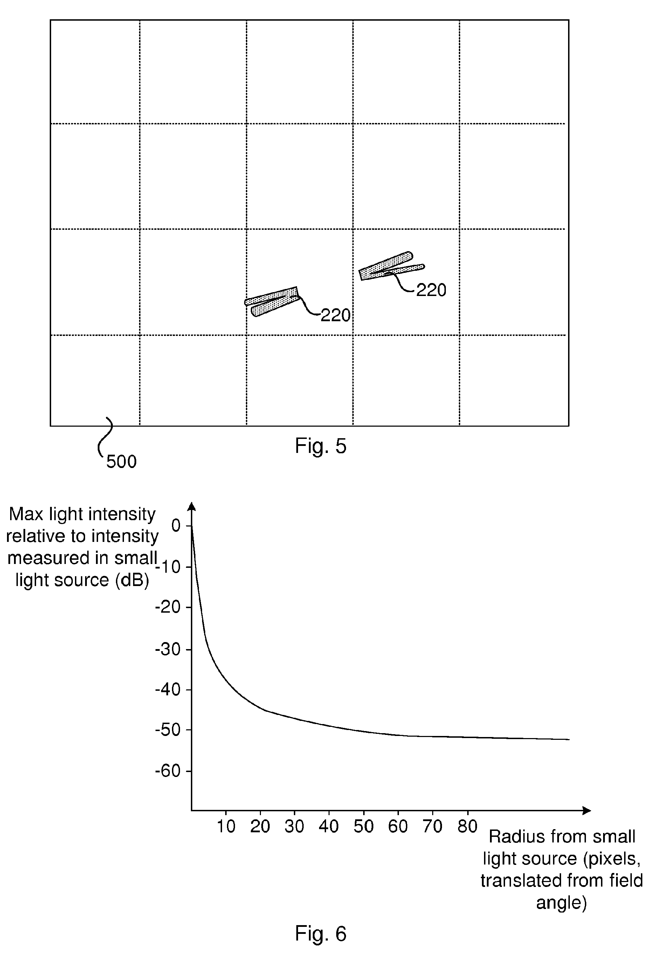

A first result image and a second result image the same size as the image 300 could then be initiated where all pixels are initially set to o. For all pixels that are at a distance larger than radius R1 from the detected light source 210 giving rise to stray light effect and have intensity higher than light intensity I1, the corresponding pixel in the first result image is set to one, resulting in the image 400 of Fig. 4. The radius R2 of the second (outer) circle 350 is larger than radius R1 and is associated with a light intensity I2 being lower than light intensity I1. Initiating the second result image and setting pixels to one for pixels outside radius R2 and above light intensity I2 yields the image 500 of Fig. 5. The total result image is the union of the first result image and the second result image, i.e., of images 400, 500 from Figs. 4 and 5, so that if a pixel is non-zero in either image 400 or image 500 it will be non-zero in the total result image.

When the above defined pixel number threshold value is set to zero, the outcome of the stray light test is that the test is passed (i.e., the camera 120 is determined to be free from stray light effects) if there are no non-zero pixels in this total result image.

In order to, for example, reduce computational resources in the image analysis device 1000 only one single result image could be analyzed, regardless of the number of radii. In this case, for all pixels located between radius R1 and radius R2 the intensity values are compared to light intensity I1 and for all pixels located outside radius R2 the intensity values are compared to light intensity I2.

According to some aspects the stray light indicator parameter is defined such that thresholding the stray light with defined thresholds should give corresponding radii below radii thresholds in order for the camera 120 to be free from stray light effects. In more details, according to an embodiment the stray light indicator parameter is defined by a relation between the contour and a circle defined by a parameter based light intensity level. The parameter based light intensity level is determined such that pixels in the image 200 located outside the circle have light intensity values above the parameter based light intensity level, and such that the circle is concentric with the contour of the light source 210. The camera 120 is then considered free from stray light effects when the circle has a radius being smaller than a radius threshold value. This circle could correspond to either circle 340 or 350, depending on the value of the parameter based light intensity level.

In this respect there could thus be at least two parameter based light intensity levels, each defining a respective circle 340, 350, where the radius increases with decreasing parameter based light intensity level.

In general terms, the image 200 could be of at least two light sources 110, 110' and hence comprise at least two light sources 210. The determining in step S114 could then be repeated for each of the at least two light sources 110, 110'. Alternatively, all but one of the at least two light sources 110, 110' are considered as representing light contaminations. For example, light source 110' could be considered as representing a light contamination. According to an embodiment the image analysis device 1000 is therefore configured to perform steps S104 and S106:
S104: The image analysis device 1000 identifies light contamination in the image 200, where the light contamination results from a light intensity contribution of another light source 110'.
S106: The image analysis device 1000 suppresses the light contamination before the determining in step S114. Suppressing the light contamination could involve the image analysis device 1000 to subtract an image taken with the light source 110' causing the light contamination turned off from the image 200 being analysed for stray light effects.

Noisy or defective pixels could also cause spurious results. Isolated high-value pixels could therefore be eliminated from the image 200 being analysed for stray light effects. Hence, according to an embodiment the image analysis device 1000 is configured to perform step S108:
S108: The image analysis device 1000 removes, before performing the determining in step S114, isolated light intensity values of pixels from the image 200 when the isolated light intensity values are above a pixel light intensity threshold value. For example, the image 200 may be subjected to morphological filtering to remove isolated pixels (or small clusters thereof) that could be caused by noise or defect pixels in the image sensor 140 before establishing whether the camera 120 is free from stray light effects or not.

The stray light indicator parameter could be scaled according to incoming light level from the light source 110, according to the responsivity of the image sensor 140, and/or according to results from having tested another camera for stray light effects. Hence, according to an embodiment the image analysis device 1000 is configured to perform step S110:
S110: The image analysis device 1000 determines a value of the stray light indicator parameter based light intensity of the light source 110, the image sensor sensitivity of the image sensor 140 of the camera 120, and/or a result obtained when testing another camera for stray light effects. In more detail, the light influx where the camera 120 is positioned can be measured and compared to a reference measurement at the time of establishment of the test acceptance thresholds. Alternatively, the combination of light intensity and image sensor responsivity can be measured using a neutral-density (ND) filter in front of the camera lens 130, which allows the image sensor 140 to measure the light source intensity within its dynamic range.

The number of parameter based radii or number of parameters based light intensity levels (such as the number of circles and the intensity for which the light should be identified as stray light) could be tuned, for example for different products and specifications. Hence, according to an embodiment the image analysis device 1000 is configured to perform step S112:
S112: The image analysis device 1000 obtains input, where the input defines which number of parameter based radii or number of parameters based light intensity levels to use during the determining in step S114.

Further, the stray light intensity can be determined as a function of radial distance of the pixels from the light source 210. Hence, according to an embodiment the image analysis device 1000 is configured to perform step S114a:
S114a: The image analysis device 1000 obtains light intensity values of pixels in the image 200 as a function of radial distance of the pixels from the light source 210. Step S114a could be part of step S114.

Performing step S114a could thus enable a curve to be produced with light intensity as function of radius. Such a curve could characterize the stray light effects of the camera 120. Fig. 6 gives one example of such a curve where the maximum light intensity (in dB) relative to the light intensity of the light source 210 is plotted as a function of the radial distance (in terms of pixels) to the light source 210 in the image 200. The curve describing light intensity values of pixels in the image 200 as a function of radial distance of the pixels from the light source 210 could by the image analysis device 1000, during the determining in step S114, be compared to one or more template curves, where each such template curve describes light intensity values of pixels as a function of radial distance of the pixels from a light source subjected to a particular degree of stray light effects.

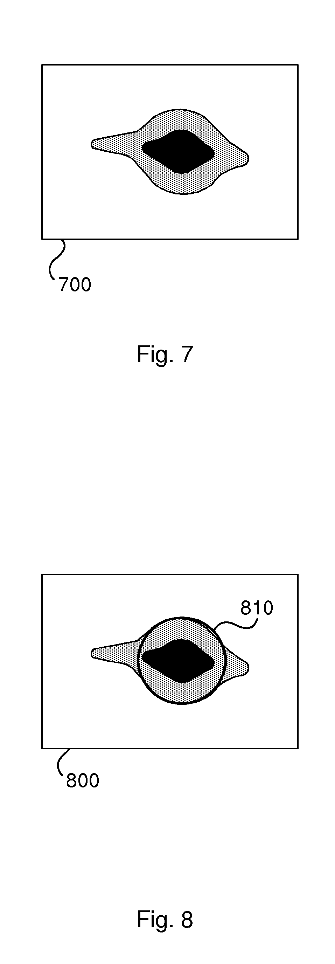

A method for finding the position of the light source 210 in the image 200 will now be disclosed. This method is applicable to any of the above disclosed embodiments for testing the camera 120 for stray light effects assuming a single light source 210 in the image 200. Consider the image 700 of Fig. 7 as input image.

For illustrative purposes the image 700 has been negated such that dark areas in the image 700 represent areas of high light intensity in the scene captured by the camera 120.

The image analysis device 1000 thresholds the image 700 for a threshold intensity level I_{Th} whereby all pixel values being below the threshold intensity level are set to zero. The image analysis device 1000 removes isolated pixels/small clusters as described above and sets the pixel values of such removed isolated pixels/small clusters to zero. The image analysis device 1000 fits a circle 810 that encloses all pixels that are non-zero, as in the image 800 of Fig. 8. The camera 120 is then considered free from stray light effects when the circle 810 has a radius being smaller than a radius threshold value. More intensity-diameter pairs could be added; the method is then repeated for each of the intensity-diameter pairs and the camera 120 passes the test only when all intensity-diameter pair tests pass (i.e., are free from stray light effects).

Fig. 10 schematically illustrates, in terms of a number of functional units, the components of an image analysis device 1000 according to an embodiment. Processing circuitry 1010 is provided using any combination of one or more of a suitable central processing unit (CPU), multiprocessor, microcontroller, digital signal processor (DSP), etc., capable of executing software instructions stored in a computer program product 1210 (as in Fig. 12), e.g. in the form of a storage medium 1030. The processing circuitry 1010 may further be provided as at least one application specific integrated circuit (ASIC), or field programmable gate array (FPGA).

Particularly, the processing circuitry 1010 is configured to cause the image analysis device 1000 to perform a set of operations, or steps, S102-S114a, as disclosed above. For example, the storage medium 1030 may store the set of operations, and the processing circuitry 1010 may be configured to retrieve the set of operations from the storage medium 1030 to cause the image analysis device 1000 to perform the set of operations. The set of operations may be provided as a set of executable instructions.

Thus the processing circuitry 1010 is thereby arranged to execute methods as herein disclosed. The storage medium 1030 may also comprise persistent storage, which, for example, can be any single one or combination of magnetic memory, optical memory, solid state memory or even remotely mounted memory. The image analysis device 1000 may further comprise a communications interface 1020 at least configured for communications with the camera 120. As such the communications interface 1020 may comprise one or more transmitters and receivers, comprising analogue and digital components. The processing circuitry 1010 controls the general operation of the image analysis device 1000 e.g. by sending data and control signals to the communications interface 1020 and the storage medium 1030, by receiving data and reports from the communications interface 1020, and by retrieving data and instructions from the storage medium 1030. Other components, as well as the related functionality, of the image analysis device 1000 are omitted in order not to obscure the concepts presented herein.

Fig. 11 schematically illustrates, in terms of a number of functional modules, the components of an image analysis device 1000 according to an embodiment. The image analysis device 1000 of Fig. 11 comprises a number of functional modules; an obtain module 1010a configured to perform step S102, and a determine module 1010g configured to perform step S114. The image analysis device 1000 of Fig. 11 may further comprise a number of optional functional modules, such as any of an identify module 1010b configured to perform step S104, a suppress module 1010c configured to perform step S106, a remove module 1010d configured to perform step S108, a determine module 1010e configured to perform step S110, an obtain module 1010f configured to perform step S112, and an obtain module 1010h configured to perform step S114a. In general terms, each functional module 1010a-1010h may in one embodiment be implemented only in hardware or and in another embodiment with the help of software, i.e., the latter embodiment having computer program instructions stored on the storage medium 1030 which when run on the processing circuitry makes the image analysis device 1000 perform the corresponding steps mentioned above in conjunction with Fig 11. It should also be mentioned that even though the modules correspond to parts of a computer program, they do not need to be separate modules therein, but the way in which they are implemented in software is dependent on the programming language used. Preferably, one or more or all functional modules 1010a-1010h may be implemented by the processing circuitry 1010, possibly in cooperation with functional units 1020 and/or 1030. The processing circuitry 1010 may thus be configured to from the storage medium 1030 fetch instructions as provided by a functional module 1010a-1010h and to execute these instructions, thereby performing any steps as disclosed herein.

The image analysis device 1000 may be provided as a standalone device or as a part of at least one further device. For example, the image analysis device 1000 may be provided in the camera 120. Alternatively, functionality of the image analysis device 1000 may be distributed between at least two functional entities. These at least two functional entities may either be part of the same device or may be spread between at least two such devices. Thus, a first portion of the instructions performed by the image analysis device 1000 may be executed in a first device, and a second portion of the of the instructions performed by the image analysis device 1000 may be executed in a second device; the herein disclosed embodiments are not limited to any particular number of devices on which the instructions performed by the image analysis device 1000 maybe executed. Hence, the methods according to the herein disclosed embodiments are suitable to be performed by an image analysis device 1000 residing in a cloud computational environment. Therefore, although a single processing circuitry 1010 is illustrated in Fig. 10 the processing circuitry 1010 may be distributed among a plurality of devices, or nodes. The same applies to the functional modules 1010a-1010h of Fig. 11 and the computer program 1220 of Fig. 12 (see below).

Fig. 12 shows one example of a computer program product 1210 comprising computer readable storage medium 1230. On this computer readable storage medium 1230, a computer program 1220 can be stored, which computer program 1220 can cause the processing circuitry 1010 and thereto operatively coupled entities and devices, such as the communications interface 1020 and the storage medium 1030, to execute methods according to embodiments described herein. The computer program 1220 and/or computer program product 1210 may thus provide means for performing any steps as herein disclosed.

In the example of Fig. 12, the computer program product 1210 is illustrated as an optical disc, such as a CD (compact disc) or a DVD (digital versatile disc) or a Blu-Ray disc. The computer program product 1210 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 1220 is here schematically shown as a track on the depicted optical disk, the computer program 1220 can be stored in any way which is suitable for the computer program product 1210.

The inventive concept has mainly been described above with reference to a few embodiments. However, as is readily appreciated by a person skilled in the art, other embodiments than the ones disclosed above are equally possible within the scope of the inventive concept, as defined by the appended patent claims. For example, the camera 120 tested for stray light effects could comprise the camera lens 130 and hence the stray light effects could occur in the camera lens 130. That is, whether the camera 120 is free from stray light effects or not could depend on whether the camera lens 130 is free from stray light effects or not, and hence, in some aspects the herein disclosed embodiments could be used for testing a camera lens 130 for stray light effects, where the camera lens 130 is used by the camera 120. Thus, when testing the camera lens 130 for stray light effects, instead of determining a value of the stray light indicator parameter based on a result obtained when testing another camera for stray light effects, a value can be determined of the stray light indicator parameter based on a result obtained when testing another camera lens for stray light effects, and so on.

## Claims

1. A method for testing a camera (120) for stray light effects, the method being performed by an image analysis device (1000), the method comprising:
obtaining (S102) an image (200, 300, 400, 700, 800) comprising a light source (210), the image (200, 300, 400, 700, 800) having been captured by the camera (120); and
determining (S114) whether the camera (120) is free from stray light effects or not by comparing light intensity in the image (200, 300, 400, 700, 800) outside a contour of the light source (210) to a stray light indicator parameter.

2. The method according to claim 1, wherein the stray light indicator parameter is defined by number of pixels in the image (200, 300, 400, 700, 800) having a light intensity value above an intensity threshold value and being located outside a circle in the image, the circle having a parameter based radius, and wherein the circle is concentric with the contour of the light source (210).

3. The method according to claim 2, wherein the camera (120) is free from stray light effects when said number of pixels is smaller than a pixel number threshold value.

4. The method according to claim 2 or 3, wherein there are at least two parameter based radii, each defining a respective intensity threshold value, the intensity threshold value decreasing with increasing parameter based radii.

5. The method according to claim 1, wherein the stray light indicator parameter is defined by a relation between the contour and a circle in the image, the circle being defined by a parameter based light intensity level, wherein pixels in the image (200, 300, 400, 700, 800) outside the circle have light intensity values above the parameter based light intensity level, and wherein the circle is concentric with the contour of the light source (210).

6. The method according to claim 5, wherein the camera (120) is free from stray light effects when said circle has a radius being smaller than a radius threshold value.

7. The method according to claim 5 or 6, wherein there are at least two parameter based light intensity levels, each defining a respective circle in the image, the radius of which increases with decreasing parameter based light intensity level.

8. The method according to claims 2 or 5, further comprising:
obtaining (S112) input defining which number of parameter based radii or number of parameters based light intensity levels to use during said determining.

9. The method according to any of the preceding claims, wherein said determining comprises:
obtaining (S114a) light intensity values of pixels in the image (200, 300, 400, 700, 800) as a function of radial distance of the pixels from the light source (210).

10. The method according to any of the preceding claims, wherein the image (200, 300, 400, 700, 800) is of at least two light sources (110, 110'), and wherein said determining is repeated for each of said at least two light sources (110, 110').

11. The method according to any of the preceding claims, further comprising:
identifying (S104) light contamination in the image (200, 300, 400, 700, 800), said light contamination resulting from a light intensity contribution of another light source (110'); and
suppressing (S106) said light contamination before said determining.

12. The method according to any of the preceding claims, further compressing:
removing (S108) isolated light intensity values of pixels from the image (200, 300, 400, 700, 800) when said isolated light intensity values are above a pixel light intensity threshold value before said determining.

13. The method according to any of the preceding claims, further comprising:
determining (S110) a value of the stray light indicator parameter based on at least one of light intensity of the light source (210), image sensor sensitivity of an image sensor (140) of the camera (120), and a result obtained when testing another camera for stray light effects.

14. An image analysis device (1000) for testing a camera (120) for stray light effects, the image analysis device (1000) comprising processing circuitry (1010) configured to cause the image analysis device (1000) to:
obtain an image (200, 300, 400, 700, 800) comprising a light source (210), the image (200, 300, 400, 700, 800) having been captured by the camera (120); and
determine whether the camera (120) is free from stray light effects or not by comparing light intensity in the image (200, 300, 400, 700, 800) outside a contour of the light source (210) to a stray light indicator parameter.

15. A computer program (1210) for testing a camera (120) for stray light effects, the computer program (1210) comprising computer code which, when run on processing circuitry (1010) of an image analysis device (1000), causes the image analysis device (1000) to:
obtain (S102) an image (200, 300, 400, 700, 800) comprising a light source (210), the image (200, 300, 400, 700, 800) having been captured by the camera (120); and
determine (8114) whether the camera (120) is free from stray light effects or not by comparing light intensity in the image (200, 300, 400, 700, 800) outside a contour of the light source (210) to a stray light indicator parameter.
